# EUROPEAN PATENT APPLICATION

(11) **EP 4 764 193 A1**
(43) Date of publication of application: **24.06.2026**
(21) Application number: 25218033.6
(22) Date of filing: 24.11.2025
(51) Int. Cl.: F02K 1/00, F02K 1/12, F02K 1/80

(54) **PROPULSION MACHINE COMPRISING A SENSING ARRANGEMENT**

(30) Priority: 23.12.2024 GB 202418936
(71) Applicant: Rolls-Royce plc, London N1 9FX (GB)
(72) Inventor: Colebrooke, Jack, Derby, DE24 8BJ (GB)
(74) Representative: Rolls-Royce plc

(57) **Abstract**

There is provided a propulsion machine 10 comprising a fluid duct defined by a wall 42, 44 and a moveable member 34, 36. The propulsion machine 10 also comprises a mounting structure 92 coupled to the moveable member 34, 36, and an extendable structure 94 having a sealing surface 96 and a sensing arrangement 83. The extendable structure 94 is moveable relative to the mounting structure 92 to provide a seal between the sealing surface 96 and an opposing surface 43 of the wall 42. The sensing arrangement 83 is configured to generate one or more signals indicative of a position of the extendable structure 94 relative to the mounting structure 92.

## Description

### FIELD

This disclosure relates to a propulsion machine comprising a sensing arrangement. This disclosure further relates to an aircraft comprising such a propulsion machine.

### BACKGROUND

An exhaust nozzle of a gas turbine engine may include a pair of articulating flaps which enable control of the area of the exhaust nozzle. An escape of core and/or bypass air around the exhaust nozzle as the or each articulating flap moves may be reduced by providing a seal between the flap and a proximal wall of the exhaust nozzle. Escaped core air may leak into an engine bay in which the gas turbine engine is disposed and where temperature sensitive components may be located. Escaped core air is also directly related to thrust losses from the gas turbine engine.

### SUMMARY

According to a first aspect there is provided a propulsion machine comprising: a fluid duct defined by a wall and a moveable member; a mounting structure coupled to the moveable member; an extendable structure having a sealing surface, the extendable structure being movable relative to the mounting structure (e.g., through a travel of the extendable structure) to provide a seal between the sealing surface and an opposing surface of the wall (e.g., throughout the travel); and a sensing arrangement configured to generate one or more signals indicative of a position of the extendable structure relative to the mounting structure.

In an embodiment, the propulsion machine comprises a sealing module. In an embodiment, the sealing module comprises the mounting structure and the extendable structure. In an embodiment, the sealing module comprises the sensing arrangement. In an embodiment, the moveable member is movable relative to the wall.

In an embodiment, the sensing arrangement comprises a conductive coil. In an embodiment, the sensing arrangement comprises a plurality of conductive coils. In an embodiment, each coil is offset from one another along a direction corresponding to (e.g., parallel to) a travel of the extendable structure relative to the mounting structure.

In an embodiment, a chamber is defined between the extendable structure and the mounting structure throughout the travel. In an embodiment, the plurality of conductive coils are disposed within the chamber. In an embodiment, the sealing module is configured to receive a pressurized actuation fluid into the chamber to actuate movement of the extendable structure and load the sealing surface against the opposing surface of the wall to provide the seal with the opposing surface throughout the travel.

In an embodiment, the conductive coils are mechanically coupled to the mounting structure. In an embodiment, the conductive coils are galvanically isolated from one another. In an embodiment, the conductive coils are each air-cored conductive coils. In an embodiment, the conductive coils are coaxial with one another. In an embodiment, the conductive coils abut (e.g., substantially abut) one another.

In an embodiment, the one or more signals includes an electrical parameter associated with (e.g., of) at least one of (e.g., each of) the conductive coils. In an embodiment, the electrical parameter is a current through the (e.g., the respective) conductive coil. In an embodiment, the electrical parameter is a voltage across the (e.g., the respective) conductive coil.

In an embodiment, the propulsion machine comprises a control system. In an embodiment, the control system is configured to compare the monitored electrical parameter associated with (e.g., of) each conductive coil. In an embodiment, the control system is configured to determine the position of the extendable structure based on the comparison. In an embodiment, the control system is configured to determine a position of the extendable structure based on the one or more signals. In an embodiment, the control system is configured to determine a wear parameter of the extendable structure based on the position.

In an embodiment, the propulsion machine comprises a ferromagnetic member mechanically coupled to the extendable structure and configured to at least partially move through a central aperture defined by the conductive coils as the extendable structure moves relative to the mounting structure.

In an embodiment, the extendable structure includes a target surface (e.g., a target conductive surface) which opposes one of the conductive coils. In an embodiment, the target surface includes a metallic material.

In an embodiment, the propulsion machine comprises a power supply system configured to apply an AC voltage to at least one of (e.g., each of) the conductive coils.

In an embodiment, the propulsion machine is a gas turbine engine. In an embodiment, the fluid duct is an exhaust gas passageway configured to discharge an exhaust flow of gas from a turbine of the gas turbine engine. In an embodiment, the wall is a side wall partially defining the exhaust gas duct. In an embodiment, the moveable member is a flap partially defining the exhaust gas passageway.

According to a second aspect there is provided an vehicle comprising a propulsion machine in accordance with the first aspect. In an embodiment, the vehicle is an aircraft.

### BRIEF DESCRIPTION OF THE DRAWINGS

Embodiments will now be described by way of example only with reference to the accompanying drawings, in which:
FIG. 1 is a simplified top view of an aircraft comprising a propulsion machine;
FIG. 2 is a sectional view of an example gas turbine engine and an exhaust nozzle;
FIG. 3 is a perspective view of an example exhaust nozzle in isolation;
FIG. 4 is a side view of the example exhaust nozzle in a non-vectored configuration;
FIG. 5 is a side view of the example exhaust nozzle in a vectored configuration;
FIG. 6 is a sectional view of a first example sealing module in an extended position, the first example sealing module being located within an exhaust nozzle;
FIG. 7 is a sectional view of the first example sealing module in a retracted position, the first example sealing module being located within an exhaust nozzle;
FIG. 8 is a sectional view of a second example sealing module in an extended position;
FIG. 9 is a sectional view of the second example sealing module in a retracted position;
FIG. 10 is a sectional view of a third example sealing module in an extended position; and
FIG. 11 is a sectional view of the third example sealing module in a retracted position.

### DETAILED DESCRIPTION

### Aircraft

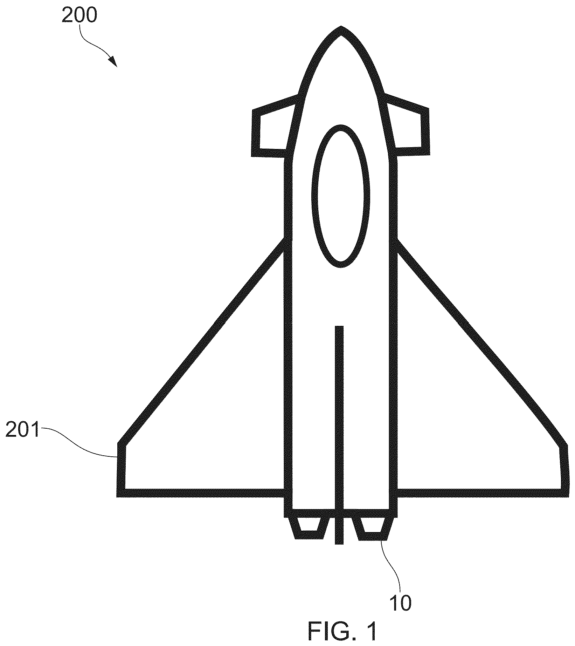

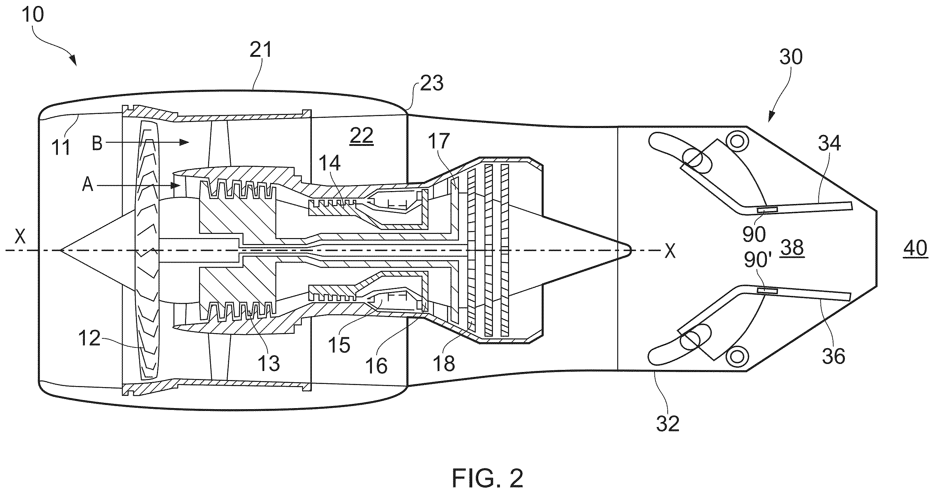

FIG. 1 shows a simplified and schematic view of an aircraft 200 comprising an airframe 201 and a propulsion machine 10. The propulsion machine 10 may be a gas turbine engine 10 in accordance with the gas turbine engine 10 described below with reference to FIG. 2.

### Propulsion machine

FIG. 2 shows a ducted fan gas turbine engine 10 (which is an example of a propulsion machine 10) having a principal and rotational axis X-X. The gas turbine engine 10 is suitable for use with the aircraft 200 described above with FIG. 1. The engine comprises, in axial flow series, an air intake 11, a propulsive fan 12, an intermediate-pressure compressor 13, a high-pressure compressor 14, a combustor 15, a high-pressure turbine 16, an intermediate pressure turbine 17, a low-pressure turbine 18 and a core engine exhaust outlet 19. A nacelle 21 generally surrounds the gas turbine engine 10 and defines the intake 11, a bypass duct 22 and a bypass exhaust outlet 23.

During operation, air entering the intake 11 is accelerated by the fan 12 to produce two air flows: a first air flow A into the intermediate pressure compressor 13 and a second air flow B which passes through the bypass duct 22 to provide propulsive thrust. The intermediate-pressure compressor 13 compresses the air flow A directed into it before delivering that air to the high-pressure compressor 14 where further compression takes place.

The compressed air exhausted from the high-pressure compressor 14 is directed into the combustor 15 where it is mixed with fuel and the mixture combusted. The resultant hot combustion products then expand through, and thereby drive the high, intermediate and low-pressure turbines 16, 17, 18 before being exhausted through the core engine exhaust outlet 19 to provide additional propulsive thrust. The high, intermediate and low-pressure turbines respectively drive the high and intermediate pressure compressors 14, 13 and the fan 12 by suitable interconnecting shafts.

### Exhaust nozzle

The gas turbine engine 10 further comprises an exhaust nozzle 30. The exhaust nozzle 30 is disposed at a rear end of the gas turbine engine 10 and generally comprises an exhaust structure 32, a first flap 34 (also referred to as a petal) and a second flap 36. The exhaust structure 32 is configured to receive an exhaust flow of gas from the combustor 15 (i.e., the first air flow A after it has passed through the combustor 15). The exhaust duct is further configured to receive the second air flow B after it has passed through the bypass duct 22. The first and second flaps 34, 36 in part define an exhaust gas duct 38 configured to convey the exhaust flow of gas to an exterior 40 of the gas turbine engine 10. Accordingly, the exhaust gas duct 38 functions as a fluid duct configured to discharge the exhaust flow of gas from the turbines 16, 17, 18 and the combustor 15 of the gas turbine engine.

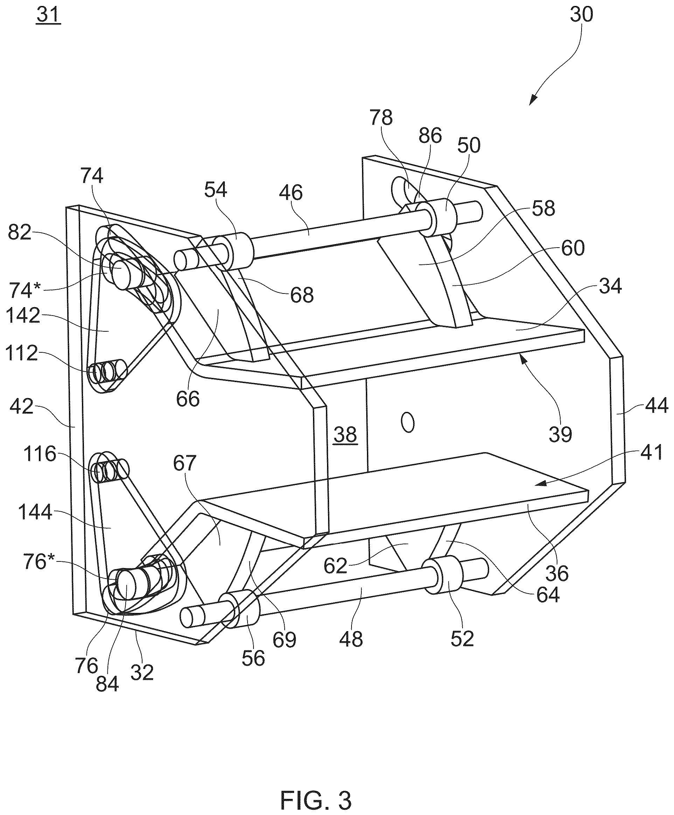

FIG. 3 is a perspective view of an example exhaust nozzle 30 suitable for use as the exhaust nozzle 30 in the gas turbine engine 10 of FIG. 1. As shown, the exhaust structure 32 comprises a first side wall 42 and a second side wall 44 which cooperate with the first and second flaps 34, 36 to define the exhaust gas duct 38 such that the side walls 42, 44 each partially define the exhaust gas duct 38. The first and second side walls 42, 44 are spaced apart from each other. The first flap 34 is disposed between the first and second side walls 42, 44 in an upper portion of the exhaust nozzle 30. The second flap 36 is disposed between the first and second side walls 42, 44 in a lower portion of the exhaust nozzle 30. The first flap 34 comprises a first control surface 39 and the second flap 36 comprises a second control surface 41. The first control surface 39 and the second control surface 41 in part define (along with the first and second side walls 42, 44) the exhaust gas duct 38. In this example the first and second control surfaces 39, 41 are geometrically similar and are reflections of each other, but in other examples may be configured differently to each other. As described in further detail below, each flap 34, 36 is moveable relative to the side walls 42, 44 to change a shape of the exhaust gas duct 38 defined therebetween. Accordingly, the flaps 34, 36 may be referred to as moveable members 34, 36.

The exhaust nozzle is configured to define paths for movement of the flaps 34, 36 relative to the side walls 42, 44. The example discussed below defines cooperating bearing surfaces, rollers and cams, but in other examples movement of the flaps 34, 36 may be guided in other ways.

A first shaft or tiebar 46 extends between the first and second side walls 42, 44 in an upper portion of the exhaust nozzle 30. A second shaft or tiebar 48 extends between the first and second side walls 42, 44 in a lower portion of the exhaust nozzle 30. A first roller 54 is rotatably supported by the first shaft 46 and a second roller 56 is rotatably supported by the second shaft 48. In addition, a third roller 50 is rotatably supported by the first shaft 46 and a fourth roller 52 is rotatably supported by the second shaft 48. The first flap 34 comprises a first cam track or flange 66 that protrudes from the respective control surface to define a first bearing surface 68. The second flap 36 comprises a second cam track or flange 67 that similarly protrudes from the respective control surface to define a second bearing surface 69. The second cam track 67 and second bearing surface 69 are located on the second flap 36 in corresponding positions to the first cam track 66 and first bearing surface 68. The first flap 34 further comprises a third cam track 58 that defines a third bearing surface 60. The second flap 36 further comprises a fourth cam track 62 that defines a fourth bearing surface 64. The fourth cam track 62 and bearing surface 64 are located on the second flap 36 in corresponding positions to the third cam track 58 and third bearing surface 60.

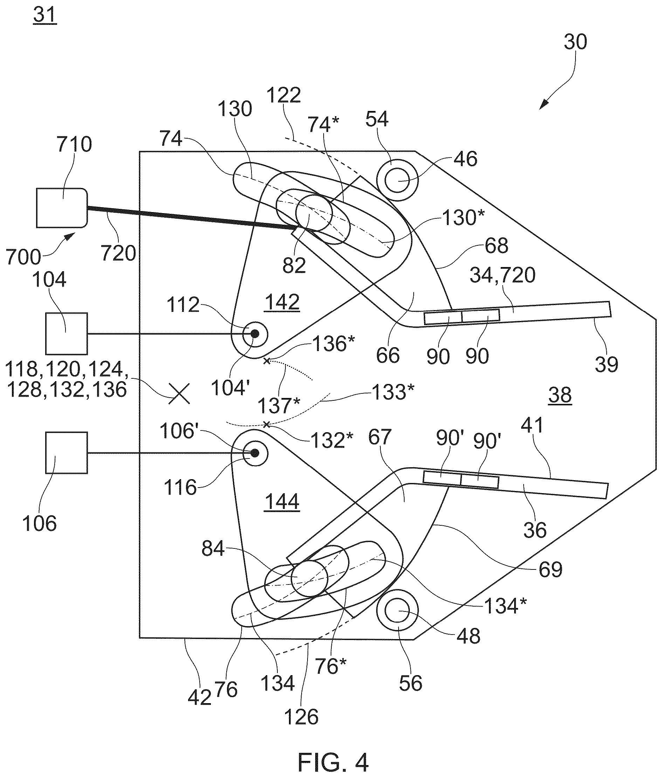

The first side wall 42 comprises a first static slot 74 in an upper portion of the exhaust nozzle 30. The first side wall 42 further comprises a second static slot in a lower portion of the exhaust nozzle 30. The second side wall 44 comprises a third static slot 78 in an upper portion of the exhaust nozzle 30. The second side wall 44 further comprises a fourth static slot in a lower portion of the exhaust nozzle 30 (not shown by FIG. 3). The first flap 34 comprises a first pin 82 that is slidably received by the first static slot 74. The second flap 36 comprises a second pin 84 that is slidably received by the second static slot. The first flap 34 further comprises a third pin 86 that is slidably received by the third static slot 78. The second flap 36 further comprises a fourth pin 88 that is slidably received by the fourth slot (not shown by FIG. 3). Further features of the example exhaust nozzle 30 shown and not shown in FIG. 3 are now described with reference to FIGs. 4 to 7.

FIG. 4 is a side view of the example exhaust nozzle 30 shown by FIG. 3 in a non-vectored. The non-vectored configuration of the exhaust nozzle 30 is suitable for use when vectoring of thrust produced by the engine 10 away from a direction parallel to the rotational axis X-X is not intended. As described in further detail below, the first flap 34 is rotatably coupled to the exhaust structure 32 for rotation about a first axis of rotation 118 and the second flap 36 is rotatably coupled to the exhaust structure 32 for rotation about a second axis of rotation 120 that is coaxial (i.e. aligned) with the first axis of rotation 118. The first and second axes of rotation 118, 120 may be defined so as to give an optimal expansion ratio between the throat and exit of the exhaust nozzle 30.

The first flap 34 comprises a convergent portion and a divergent portion. Accordingly, the first flap 34 is a convergent-divergent flap. Likewise, the second flap 36 comprises a convergent portion and a divergent portion. Accordingly, the second flap 36 is also a convergent-divergent flap. The first and second flaps 34, 36 define a convergent-divergent nozzle, but in other examples may have an alternative configuration that does not define a convergent-divergent nozzle.

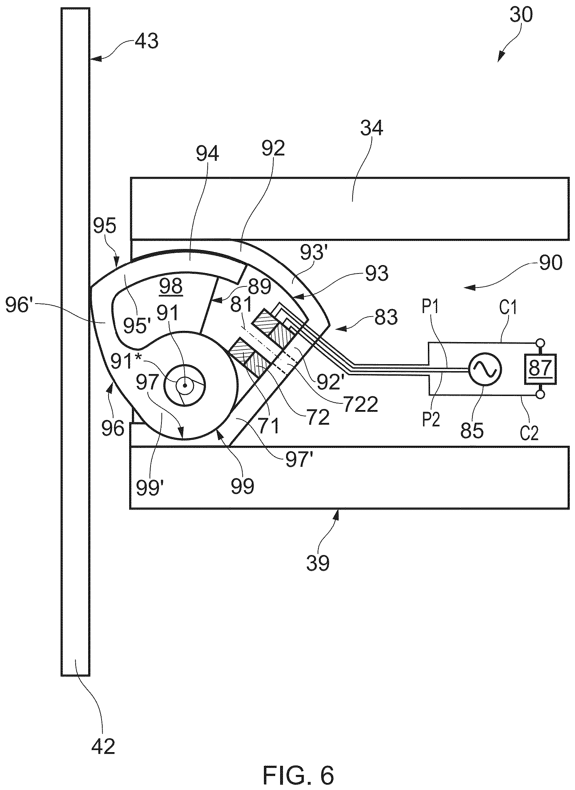

As shown in FIG. 4, the first bearing surface 68 forms part of a first curved surface 122 having a central axis 124 that is coaxial with the first and second axes of rotation 118, 120. The second bearing surface 69 forms part of a second curved surface 126 having a central axis 128 that is coaxial with the first and second axes of rotation 118, 120. In the example of FIG. 6, each curved surface 122, 126 is a cylindrical surface 122, 126 and the radius of the first cylindrical surface 122 is equal to the radius of the second cylindrical surface 126. Accordingly, the first and second cylindrical surfaces 122, 126 are coincident. A centreline of the first static slot 74 extends at least part way along a first static arc 130 having a centre 132 that is coincident with the first and second axes of rotation 118, 120. A centreline of the second static slot 76 extends at least part way along a second static arc 134 having a centre 136 that is coincident with the first and second axes of rotation 118, 120. Accordingly, the static slots 74, 76 have corresponding curved shapes. The radius of the first static arc 130 is equal to the radius of the second static arc 134. Accordingly, the first and second static arcs 130, 134 lie on a single circle. The first pin 82 and the first roller 54 are circumferentially separated with respect to the first axis of rotation 118. Similarly, the second pin 84 and the second roller 56 are circumferentially separated with respect to the second axis of rotation 120.

The exhaust nozzle 30 comprises a first moveable cam element 142 and a second moveable cam element 144. The first moveable cam element 142 is rotatably coupled to the first wall 42 at a first pivot 112, whereas the second moveable cam element 144 is rotatably coupled to the first wall 42 at a second pivot 116. In other examples, the first and second pivots 112, 116 may not be located in the first wall 42. For instance, the first and second pivots 112, 116 may be located at other fixed positions within the exhaust nozzle 30. The first moveable cam element 142 comprises a first moveable slot 74* which is configured to slidably receive the first pin 82. The first pin 82 extends through both the first static slot 74 and the first moveable slot 74* so as to partially constrain the relative positions of each. Similarly, the second moveable cam element 144 comprises a second moveable slot 76* which is configured to slidably receive the second pin 84. The second pin 84 extends through both the second static slot 76 and the second moveable slot 76* so as to partially constrain the relative positions of each.

A centreline of the first moveable slot 74* extends at least part way along a first moveable arc 130* having a centre 132*. A centreline of the second moveable slot 76* extends at least part way along a second moveable arc 134* having a centre 136*. Accordingly, each moveable slot 74*, 76* has a curved shape. In this example, the radius of the first moveable arc 130* is equal to the radius of the second moveable arc 134*.

The exhaust nozzle 30 also comprises a first actuator 104 and a second actuator 106. The first actuator 104 is generally configured to move the first moveable cam element 142 and thereby cause the first flap 34 to be moved, whereas the second actuator 106 is generally configured to move the second moveable cam element 142 and thereby cause the second flap 36 to be moved. In the example of FIG. 4, the first actuator 104 is a rotary-type actuator (e.g., including an electric motor) and a driving portion 104' of the first actuator 104 is pivotally coupled to the first moveable cam element 142 at the first pivot 112. Likewise, in the example of FIG. 4, the second actuator 106 is a rotary-type actuator (e.g., an including electric motor) and a driving portion 106' of the second actuator 106 is pivotally coupled to the second moveable cam element 144 at the second pivot 116. However, it will be appreciated that other actuator-types are suitable for use as the first actuator 104 and/or the second actuator 106. For instance, the or each actuator 104, 106 may be a linear-type actuator (e.g., including an electromagnetic solenoid or a hydraulic cylinder) and the driving end of the or each actuator may be coupled to the respectively moveable cam element 142, 144 other than at the pivot 112, 116.

During operation of the exhaust nozzle 30 (e.g., to move the flaps 34, 36), the first actuator 104 is able to actuate the first flap 34 about the first axis of rotation 118 through a plurality of first intermediate positions between a first inner position and a first outer position. It will be appreciated that the first inner position need not be the innermost position that the first flap 34 is able to be actuated to and the first outer position need not be the outermost position that the first flap 34 is able to be actuated to. During actuation of the first flap 34, the first pin 82 slides along the first static slot 74 and the first bearing surface 68 bears against the first roller 54. The first roller 54 constrains the motion of the first flap 34 to a predetermined path, such that movement of the first pin 82 along the first static slot 74 causes the first flap 34 to undertake a predetermined compound movement of translation and rotation with one degree of freedom (i.e., so that each position of the first pin 82 along the first static slot 74 corresponds maps to a single respective translational and rotational position of the first flap 34). In the non-vectored configuration shown by FIG. 4, the first flap 34 has been positioned (by means of the first actuator 104 positioning the first moveable cam element 142) at a first intermediate position between the first inner position and the first outer position.

During operation of the exhaust nozzle 30, the second actuator 106 is able to actuate the second flap 36 about the second axis of rotation 120 through a similar plurality of second intermediate positions in the same way.

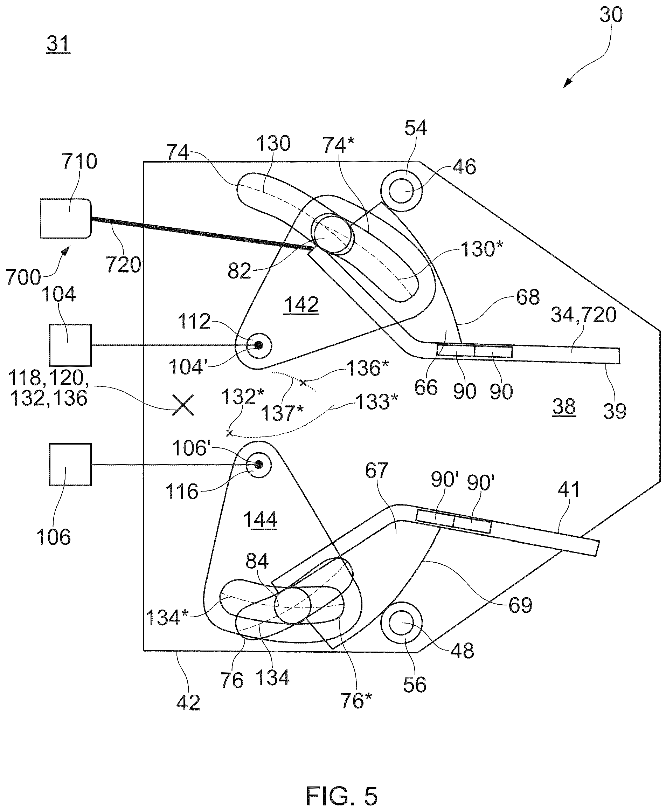

The first and second flaps 34, 36 can be actuated to the positions shown in FIG. 4 in the non-vectored configuration. Examples of various additional combinations of positions that the first and second flaps 34, 36 can be actuated to in other configurations are described below with reference to FIGs. 5 to 7.

FIG. 5 is a side view of the example exhaust nozzle 30 shown by FIG. 3 in a vectored configuration. The vectored configuration of the exhaust nozzle 30 is suitable for use when vectoring of thrust produced by the engine 10 away from a direction parallel to the rotational axis X-X is intended. In the vectored configuration, the first flap 34 has been positioned (by means of the first actuator 104 positioning the first moveable cam element 142) at a first inner position in which the first flap 34 has been rotated approximately 6 degrees closer to the principal rotational axis X-X of the gas turbine engine 10 compared to the first intermediate position shown by FIG. 4; and the second flap 36 has been positioned (by means of the second actuator 106 positioning the first moveable cam element 144) at a second intermediate position in which the second flap 36 has been rotated approximately 6 degrees further from the principal rotational axis X-X of the gas turbine engine 10 compared to the second intermediate position shown by FIG. 4.

The position of the centre 132* of the first moveable arc 130* varies between each of the positions shown in FIGs. 4 to 7. In particular, the position of the centre 132* moves along a first trace 133* as the first cam element 142 (and therefore the first movable slot 74*) is moved between the positions shown in each of FIGs. 4 to 7. Throughout the range of first intermediate positions and at both the first inner position and the first outer position of the first flap 34, the centre 132* is offset from the first axis of rotation 118. Similarly, the position of the centre 136* of the second moveable arc 134* varies between each of the positions shown in FIGs. 4 to 6. Namely, the position of the centre 136* moves along a second trace 137* as the second cam element 144 (and therefore the second movable slot 76*) is moved between the positions shown in each of FIGs. 4 to 7. Throughout the range of second intermediate positions and at both the second inner position and the second outer position of the second flap 36, the centre 136* is offset from the second axis of rotation 120.

Also shown, highly schematically, in each of FIGs. 4 to 7 is a ducting system 700 (or, more simply, a system 700). The ducting system comprises a first structure 710 and a conduit 730. The first flap 34 forms a part of the ducting system 700, and the first flap 34 may be referred to as a second structure 720 of the ducting system 700. The first structure 710 is fixed with respect to, and may form a part of, the first side wall 42. Consequently, the second structure 720, 34 is movable (and, in use, moves) with respect to the first structure 710 as shown by Figures 3 to 6. For this reason, the ducting system 700 may be referred to as an articulatable (or articulating) ducting system 700.

The ducting system 700 is generally configured to convey a fluid (e.g., a gas comprising air) from the first structure 710 to the second structure 720, 34 via the conduit 730 for the purpose of, by way of example, cooling the second structure 720, 34 and in particular for cooling the control surface 39 of the first flap 34. The first control surface 39 of the first flap 34 is, in use, exposed to the exhaust flow of gas conveyed through the exhaust gas passageway 38. As a result, the first control surface 39 may also be referred to as a first gas-washed surface 39. The fluid may be, in particular, a fluid received (directly or indirectly) into the first structure 710 from another part of the gas turbine engine 10, such as gas from a section of the core upstream of the combustor 15 (e.g., the compressor(s) 13, 14) or from the bypass duct 22 (e.g., from the propulsive fan 12), which would generally be of a lower temperature than gas received from the core in the exhaust gas passageway. Namely, the gas turbine engine 10 may be configured to extract a bleed flow from a location upstream of the exhaust nozzle 30 and the ducting system 700 may be configured to convey the bleed flow from the first structure 710 to the second structure 720, 34. Once conveyed into the second structure 720, 34, the fluid (e.g., the gas) may flow through one or more apertures provided in the first gas-washed surface 39 into a region of the exhaust gas passageway 38 proximal to the first gas-washed surface 39. As a result, a boundary region of relatively cool gas between the exhaust gas passageway 38 and the first flap 34 is generated. This reduces a rate of heat transfer into the exhaust flaps, thereby limiting and/or reducing a temperature of the first flap 34 (and, in particular, of the first control surface 39) during operation of the gas turbine engine 10. The boundary region may provide film or effusion cooling.

### Sealing module

An example sealing module 90, 90' suitable for use with the exhaust nozzle 30 described above will now be described. As will be apparent from the following description, the example sealing module 90, 90' is configured to be mounted to a moveable member (such as a flap 34, 36 as described above) and to provide a seal between the moveable member and a wall (such as the side walls 42, 44 as described above). As such, the disclosure envisages sealing modules, including the example sealing module, being suitable for application to the example exhaust nozzle 30 described above, or being suitable for application to other fluid ducts defined by a wall and a moveable member.

It will be appreciated that the characteristics of the seal provided by the sealing module 90, 90' is atypical because, in use, the flap 34, 36 moves in a direction which is generally perpendicular to a line along which the seal acts (e.g., the sealing line). The sliding speed between the articulating flap 34, 36 and the proximal wall 42, 44 is also complex to categorise because it is both static and dynamic.

The exhaust nozzle 30 further comprises a plurality of sealing modules 90, 90' for providing a seal between the first and second side walls 42, 44 and the respective flaps 34, 36 as the latter are moved in use. As shown by each of FIGs. 4 to 7, sealing modules 90 are fixed to (e.g., mechanically coupled to) the first flap 34 proximal to the first side wall 42 while additional sealing modules 90' are fixed (e.g., mechanically coupled to) to the second flap 36 proximal to the first side wall 42. Each sealing module 90, 90' of the exhaust nozzle 30 is disposed at least partially between a respective flap 34, 36 and a respective side wall 42, 44.

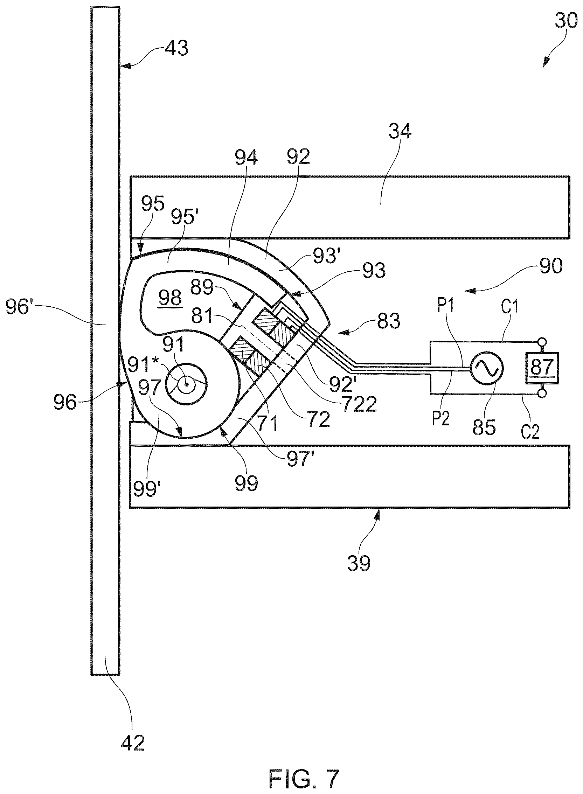

FIGs. 6 and 7 are cross-sectional views of a first example sealing module 90 suitable for use within the exhaust nozzle 30 of FIGs. 3 to 5. In FIG. 6, the first example sealing module 90 is shown in situ within an exhaust nozzle 30 as described above with reference to FIGs. 3 to 5 in an extended position. In FIG. 7, the first example sealing module 90 is shown in situ within the exhaust nozzle 30 in a retracted position.

The first example sealing module 90 includes a mounting structure 92 disposed within, and fixed to (e.g., mechanically coupled to), the first flap 34, and an extendable structure 94 having a sealing surface 96. The extendable structure 94 is hingedly mounted to the mounting structure 92 about a pivot axis 91. Accordingly, the extendable structure 94 is movable relative to the mounting structure 92 throughout a rotational travel of the extendable structure 94 about the pivot axis 91 between the extended position shown by FIG. 6 and the retracted position shown by FIG. 7. A chamber 98 is defined between the mounting structure 92 and the extendable structure 94 throughout the rotational travel.

The mounting structure 92 has a first guide surface 93 and a first hinge surface 97. Correspondingly, the extendable structure 94 has a second guide surface 95 and a second hinge surface 99. The first and second hinge surfaces 97, 99 are disposed radially inward of the first and second guide surfaces 93, 95 with respect to the pivot axis 91 (e.g., first and second hinge surfaces 97, 99 are relatively proximal to the pivot axis 91 compared to the first and second guide surfaces 93, 95). Further, the first guide surface 93 is radially outward of the second guide surface 95 with respect to the pivot axis 91 and the first hinge surface 97 is radially outward of the second hinge surface 99 with respect to the pivot axis 91. The surfaces 93, 95, 97, 99 are each curved (e.g., arcuate) surfaces, with the guide surfaces 93, 95 being complementary surfaces and the hinge surfaces 97, 99 also being complementary surfaces.

More specifically, the first guide surface 93 is defined by an arcuate arm portion 93' of the mounting structure 92 which extends partially around the extendable structure 94 while the second guide surface 95 is defined by a complementary arcuate arm portion 95' of the extendable structure 94 which extends partially within the arcuate arm portion 93' of the mounting structure 92. The first hinge surface 97 is defined by a joint portion 97' of the mounting structure 92 and the second hinge surface 99 is defined by a complementary joint portion 99' of the extendable structure 94. The arcuate arm portion 93' is separated from the joint portion 97' of the mounting structure 92 by a connecting portion 92' thereof, whereas the arcuate arm portion 95' is separated from the joint portion 99' of the extendable structure 94 by a connecting portion 96' thereof. The connecting portion 96' also defines the sealing surface 96.

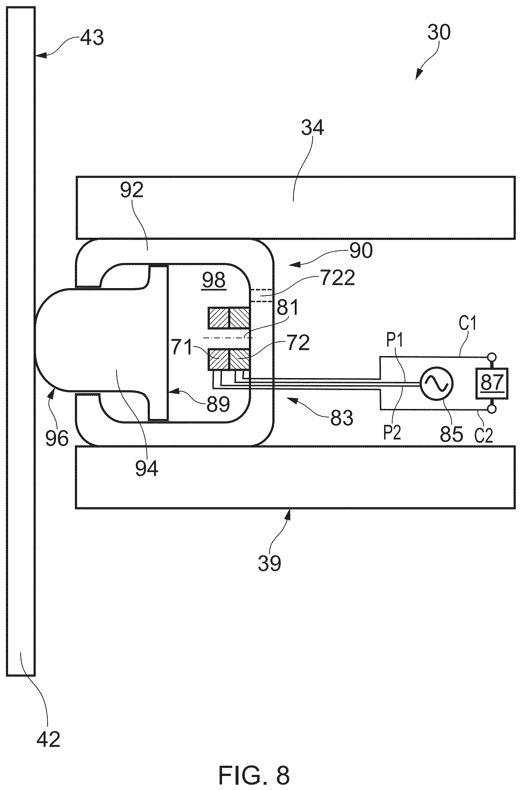

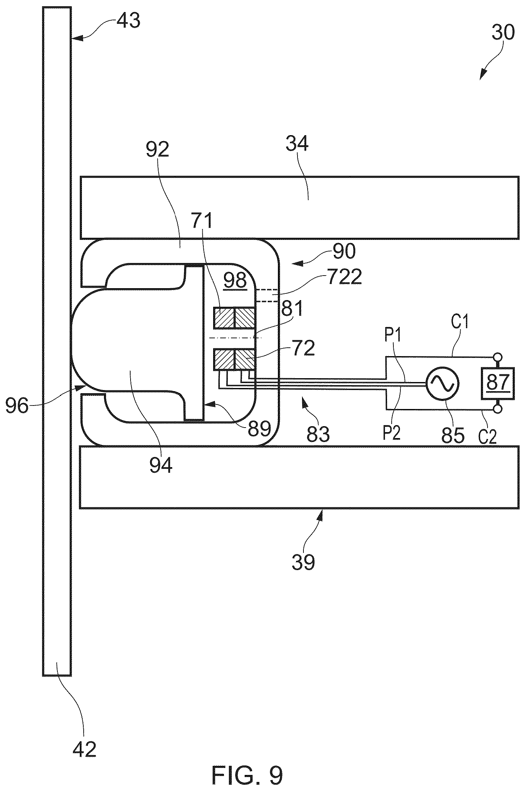

The first and second guide surfaces 93, 95 cooperate to at least partially close the chamber 98 throughout the rotational travel by defining a clearance fit therebetween. Likewise, first and second hinge surfaces 97, 99 cooperate to at least partially close the chamber 98 throughout the rotational travel by defining a clearance fit therebetween. The guide surfaces 93, 95 and the hinge surfaces 97, 99 may each be more generally referred to as interface surfaces 93, 95, 97, 99 (e.g., first and second interface surfaces, as appropriate). Each interface surface 93, 95, 97, 99 is concentric about the pivot axis 91 to facilitate movement of the mounting structure 92 and the extendable structure 94 throughout the rotational travel between the positions shown by FIGs. 8 and 9.

The first example sealing module 90 is configured to received a fluid into the chamber 98. Receipt of the fluid at a pressure which is greater than an ambient pressure around extendable structure 94 causes rotational movement of the external structure 94 relative to the mounting structure 92 around the pivot axis 91 towards the first side wall 42 of the exhaust nozzle 30, and thus loading of the sealing surface 96 against an opposing surface 43 of the side wall 42 throughout the rotational travel. The fluid which the first example sealing module 90 is configured to receive into the chamber 98 for this purpose may be referred to as a pressurized actuation fluid. The loading of the sealing surface 96 against the opposing surface 43 as caused by the receipt of the pressurized actuation fluid results in the provision of a seal between the sealing surface 96 and the opposing surface 43. In other words, receipt of the pressurized actuation fluid energizes or actuates the sealing module 90 and promotes formation and maintenance of the seal between the sealing surface 96 and the opposing surface 43, with the extension of the extendable structure accommodating a variable distance between the flap 34 and the side wall 42 in use. FIGs. 8 and 9 show an example aperture 722 positioned within the mounting structure 92 through which the pressurized actuation fluid may be received into the chamber 98 from an adjacent plenum within the flap 34. It will be appreciated that in other examples an aperture may be suitably positioned to receive pressurized actuation fluid depending on a particular ducting system in the component to which the sealing module 90 is mounted.

In general, the sealing module 90 and the gas turbine engine 10 as a whole (e.g., the ducting system 700) may be configured to ensure that a balance between a pressure of the pressurized actuation fluid and the ambient pressure around extendable structure 94 (e.g., the pressure of the gas conveyed by the exhaust gas duct 38) is provided which enables effective sealing of the flap 34, 36 against the adjacent side wall 42, 44, while reducing (e.g., minimizing) drag between the sealing surface 96 and the opposing surface 43. This may be achieved by appropriate sizing of components and/or by active control of supply of pressurized actuation fluid into the chamber 98.

The sealing surface 96 is shaped to give a shallow approach angle with respect to the opposing surface 43 throughout the travel of the expandable structure 94. This facilitates the seal provided by the sealing module 90 sliding in multiple directions as the flap 34 is moved.

The clearance fits between the hinge surfaces 97, 99 and the guide surfaces 93, 95 form respective gaps for allowing the pressurized actuation fluid to leave the chamber 98. The movement of the pressurized actuation fluid through the gap(s) defined between the respective interface surfaces 93, 95, 97, 99 promotes cooling of the sealing module 90. Namely, the pressurized actuation fluid may be received at a significantly lower temperature than a bulk temperature of the gas conveyed by the exhaust gas duct 38 (especially if the pressurized actuation fluid corresponds to a bleed flow of air extracted from the bypass duct 22 of the gas turbine engine 10). Therefore, movement of the pressurized actuation fluid through the gap(s) defined between the respective interface surfaces 93, 95, 97, 99 and subsequently washing over of the nearby surfaces of the sealing module 90 provides cooling thereto. In particular, the gap between the hinge surfaces 93, 95 enables pressurized actuation fluid to wash over the sealing surface 96 and thus provides a buffer zone of cooling air over the sealing surface, providing a film or effusion cooling effect, or comparable effect. Further, if the extendable structure 94 were to suffer a structural failure which resulted in the loss of the sealing surface 96, the buffer zone of cooling air which originates from the gap between the interface surfaces 93, 95, 97, 99 floods the surrounding area, thereby mitigating an impact of hot gases escaping from the exhaust gas duct 38 around the respective flap. The gap between the interfacing surfaces 93, 95, 97, 99 may be selected so that a target amount of pressurized actuation fluid may leave the chamber 98 per unit time to provide an appropriate amount of cooling to the sealing module 90.

The pressurized actuation fluid may correspond to at least a portion of the bleed flow extracted from the location upstream of the exhaust nozzle 30 as supplied by the ducting system 700 which includes the flap 34 as part of the second structure 720. The bleed flow may be extracted from a section of the core or the bypass duct 22 of the gas turbine engine 10.

The clearance fit between the first and second guide surfaces 93, 95 and/or the clearance fit between the first and second hinge surfaces 97, 99 may be a close clearance fit in operation (e.g., a H8/f7 ISO 286-1 hole-basis fit or a ISO 286-1 F8/h7 shaft-basis fit in operation). That is, the first and second guide surfaces 93, 95 and/or the first and second hinge surfaces 97, 99 are configured so that they do not cooperate to provide an interference fit therebetween.

The function of the sealing module 90 is not fundamentally reliant on compliance (e.g., resilient deformation) of the materials from which it is formed to provide the seal with the opposing surface 43. Accordingly, the sealing module 90 may be formed from a wider range of materials, including ceramics. The mounting structure 92 and/or the extendable structure 94 may be formed from a material comprising a ceramic. The use of materials comprising a ceramic for the mounting structure 92 and/or the extendable structure 94 is advantageous in terms of expected wear, sliding friction between the flaps 34, 36 and the side walls 42, 44, as well as a maximum operating temperature of the sealing module 90. In addition, by implementing materials and a configuration which does not rely on material compliance (e.g. resilient deformation) for operation reduces a likelihood that the materials from which the sealing module 90 is formed will suffer from cracking, and so sealing modules 90 in accordance with the present disclosure are associated with increased robustness.

The sealing module 90 may comprise a rotational spring 91* (e.g., resilient member 91*) which is configured to resiliently bias the extendable structure 94 away from the mounting structure 92 and towards the opposing surface 43 (i.e. towards the extended position). The resilient biasing of the extendable structure 94 enables preloading of the sealing surface 96 against the opposing surface 43 during transient conditions (e.g., during a start-up procedure of the gas-turbine engine) in which the supply of pressurized actuation fluid may not be relied upon for loading the sealing surface 96 against the opposing surface 43. In some examples, the extendable structure may be resiliently biased to the extended position (e.g. by a rotational spring or other type of spring), and there may be no means for pressurized actuation such as the aperture 722 or associated ducting system.

The extendable structure 94 also includes a target surface 89. The target surface 89 is substantially planar and is formed from (e.g., includes or is composed of) a conductive material, such as a metallic (e.g., ferrous) material. The target surface is fixed to the arcuate arm portion 95' and the complementary joint portion 99'. In use, the target surface 89 moves with the extendable structure 94 as the extendable structure 94 moves relative to the mounting structure 92 throughout the rotational travel of the extendable structure 94 about the pivot axis 91. It follows that a position of the target surface 89 relative to the mounting structure 92 corresponds to a position of the extendable structure 94 as a whole relative to the mounting structure 92.

The sealing module 90 comprises a sensing arrangement 83 which, as will be described in further detail below, is configured to generate at least one signal indicative of the position of the extendable structure 94 relative to the mounting the structure. The sensing arrangement comprises a plurality of conductive coils 71, 72 which are proximal to one another. In the example of FIGs. 6 and 7, the plurality of conductive coils includes a measurement conductive coil 71 and a reference conductive coil 72. The conductive coils 71, 72 are each mechanically coupled (e.g., affixed to) the mounting structure 92. In particular, in the first example sealing module 90 shown by Figs. 6 and 7, the conductive coils 71, 72 are each mechanically coupled (e.g., affixed to) the connecting portion 92' of the mounting structure 92' and are disposed within the chamber 98 (although this need not necessarily be the case).

The conductive coils 71, 72 are offset from one another along a direction substantially parallel to the rotational travel of the extendable structure 94 relative to the mounting structure 92. The measurement conductive coil 71 is closer (e.g. more proximal) to the target surface 89 than the reference conductive coil 72 throughout the rotational travel of the extendable structure 94. The measurement conductive coil 71 (e.g., a superior portion of the measurement conductive coil 71) opposes the target surface 89 at all points within the rotational travel of the extendable structure 94. Further, an inferior portion of the measurement coil 71 contacts an superior portion of the reference coil 72 such that the conductive coils 71, 72 abut one another. In this way, the conductive coils 71, 72 are placed back-to-back.

As will be appreciated by those skilled in the art, each conductive coil 71, 72 includes a wound conductor (e.g., a wire). Each conductive coil 71, 72 is generally annular and extends around an axis 81 to form a central aperture therethrough. That is, the conductor of each conductive coil 71, 72 is wound around the axis 81 multiple times. Accordingly, each conductive coil 71, 72 has a plurality of turns corresponding to the number of times which the conductor of the respective conductive coil 71, 72 is wound around the axis 81. The conductive coils 71, 72 are galvanically isolated (and insulated) from one another. The axes 81 of the conductive coils 71, 72 are aligned with one another and hence the conductive coils 71, 72 are coaxial with one another. The central aperture of each conductive coil 71, 72 is at least partially vacant (e.g., and does not comprise a soft magnetic/ferrite core) such that each conductive coil 71, 72 may be referred to as an air-cored conductive coil 71, 72. The conductive coils 71, 72 are materially and structurally similar (e.g.,. identical) to one another.

The gas turbine engine 10 (e.g., the exhaust duct 30) also includes a power supply system 85 and a control system 87. The power supply system 85 is electrically coupled (e.g., connected) to each of the conductive coils 71, 72 by respective power channels P1, P2. The power supply system is configured to apply, through the power channels P1, P2, a respective AC voltage to each of the conductive coils 71, 72. The control system 87 is communicatively coupled (e.g., connected) to each of the conductive coils 71, 72 by respective communication channels C1, C2. The control system may comprise, for example, a microprocessor, a field-programmable gate array (FPGA) or an integrated circuit (IC). The control system is configured to monitor, through the communication channels C1, C2, a respective electrical parameter of each of the conductive coils 71, 72.

In use, when the power supply system 85 applies the AC voltage to each of the conductive coils 71, 72, an alternating magnetic field (i.e., a primary magnetic field) is generated by each of the conductive coils 71, 72. If the target face 89 is located within the alternating magnetic field generated by one of the conductive coils 71, one or more eddy currents are induced within the target face 89. If and when the target face 89 is located within the alternating magnetic field generated by one of the conductive coils 71, 72, the target face 89 may be described as being "in range" of the respective conductive coil 71, 72. On the other hand, when the target face 89 is not located within the alternating magnetic field generated by one of the conductive coils 71, 72, the target face 89 may be described as being "out of range" of the respective conductive coil 71, 72.

Because the measurement coil 71 is closer (e.g. more proximal) to the target surface 89 than the reference conductive coil 72 throughout the rotational travel of the extendable structure 94, as the extendable structure 94 moves from the extended position shown by FIG. 6 to the retracted position shown by FIG. 7 the target face 89 enters the primary magnetic field generated by the measurement coil 71 (e.g., becomes "in range" of the measurement coil 71) before it can enter the primary magnetic field generated by the reference coil 72 (e.g., becomes "in range" of the reference coil 72). Due to the relative distances and the size of the primary magnetic fields involved, it might be that the target face 89 never enters the primary magnetic field generated by the reference coil 72 throughout the rotational travel of the extendable structure 94.

The eddy current(s) induced in the target face 89 by the primary magnetic field, in turn, generate one or more secondary magnetic fields proximal to the target face that oppose the primary magnetic field generated by the conductive coil 71 (e.g., the measurement conductive coil 71). The interaction between the primary and secondary magnetic fields alters the effective impedance of the conductive coil 71. The change in effective impedance of the conductive coil 71 corresponds to the distance between the conductive coil 71 and the target face 89 and results in a change in the current through the conductive coil 71. If the target face 89 does not become "in range" of the reference coil 72, the effective impedance of/current through the reference coil 72 is not changed (e.g., substantially affected) by the movement of the extendable structure 94. Accordingly, the electrical parameter of each of the conductive coils 71, 72 which the control system 87 is configured to monitor may be the current through the respective current through each conductive coil 71, 72. In this example, the current through each conductive coil 71, 72 is therefore the signal generated by the sensing arrangement 83 which is indicative of the position of the position of the extendable structure 94 relative to the mounting structure 92 in the example of FIGs. 6 and 7.

The control system 87 is configured to determine the position of the extendable structure 94 relative to the mounting structure 92 based on the electrical parameter of each conductive coil 71, 72 (or, more broadly, the one or more signals generated by the sensing arrangement 83). Specifically, by comparing the monitored electrical parameter of each conductive coil 71, 72, the control system 87 is able to determine whether: (i) the target face 89 is either "out of range" of both of the conductive coils, for example when the extendable structure 94 is in the extended position shown by FIG. 6 and thus the effective impedance of each conductive coil 71, 72 is similar; or (ii) the target face 89 is "in range" of one of the conductive coils (i.e., the monitoring conductive coil) 71 but "out of range" of the other conductive coil (i.e., the reference conductive coil 72), for example when the extendable structure 94 is in the retracted position shown by FIG. 7 and hence the effective impedance of each conductive coil 71, 72 is dissimilar. Accordingly, the control system 87 need not linearise the signal(s) received from the sensing arrangement 83 in order to determine the position of the extendable structure 94 relative to the mounting structure 92.

Because the conductive coils 71, 72 are proximal to (e.g., abut) one another, a temperature of each conductive coils 71, 72 is approximately the same regardless of the overall temperature (e.g., overall bulk temperature) of the sealing module 90. Therefore, any variation in the effective impedance of the conductive coils 71, 72 due to relatively high temperatures within the exhaust nozzle 30 has the same impact on each of the conductive coils 71, 72 and thus does not undermine the ability of the sensing arrangement 83 to accurately generate signal(s) indicative of the position of the extendable structure 94 relative to the mounting structure 92.

FIGs. 8 and 9 are cross-sectional views of a second example sealing module 90 suitable for use within the exhaust nozzle 30 of FIGs. 3 to 5. In FIG. 8, the second example sealing module 90 is shown in situ within an exhaust nozzle 30 as described above with reference to FIGs. 3 to 5 in an extended position. In FIG. 9, the second example sealing module 90 is shown in situ within the exhaust nozzle 30 in a retracted position. The second example sealing module 90 is generally similar to the first example sealing module 90 described above with reference to FIGs. 6 and 7, with like reference signs denoting common or similar features. In contrast to the first example sealing module 90 described above with reference to FIGs. 6 and 7, in the second example sealing module 90, the extendable structure 94 is slidably mounted (rather than being hingedly) to the mounting structure 92 such that the extendable structure 92 is movable relative to the mounting structure 92 throughout a translational travel (rather than a rotational travel) of the extendable structure 94 between the extended position and the retracted position.

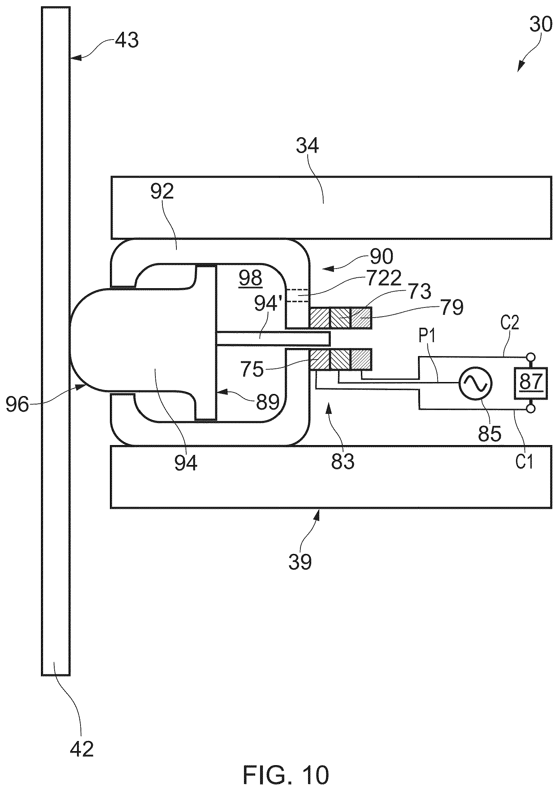

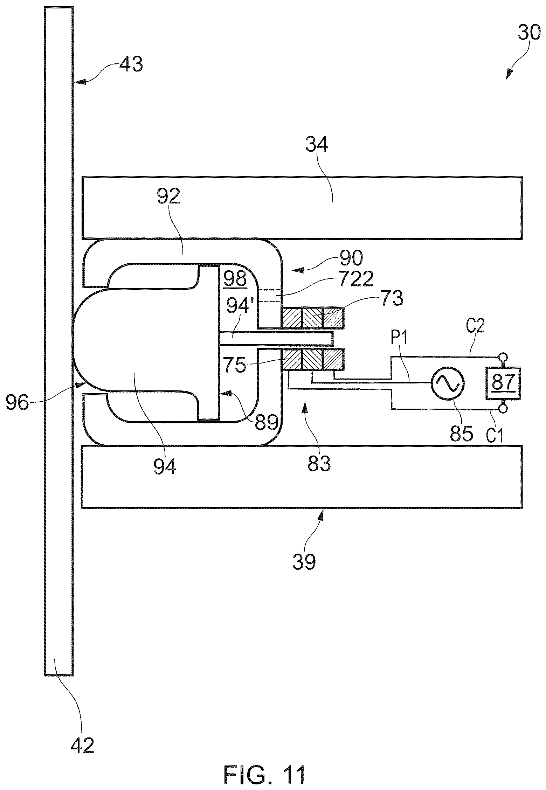

FIGs. 10 and 11 are cross-sectional views of a third example sealing module 90 suitable for use within the exhaust nozzle 30 of FIGs. 3 to 5. In FIG. 10, the third example sealing module 90 is shown in situ within an exhaust nozzle 30 as described above with reference to FIGs. 3 to 5 in an extended position. In FIG. 11, the third example sealing module 90 is shown in situ within the exhaust nozzle 30 in a retracted position. The third example sealing module 90 is generally similar to the second example sealing module 90 described above with reference to FIGs. 8 and 9, with like reference signs denoting common or similar features.

In the third example sealing module 90, the plurality of conductive coils includes a primary conductive coil 73 and a secondary conductive coil. The primary conductive coil 73 is coaxial with and located between respective portions SC-1, SC-2 of the secondary conductive coil. Further, the third example sealing module 90 comprises an elongate prismatic member 94' coupled to the movable structure 92. The elongate prismatic member 94' includes (e.g., is formed from) a ferromagnetic material. In the example of FIGs. 10 and 11, the plurality of conductive coils are disposed outside of the chamber 98 (although this need not necessarily be the case). The ferromagnetic member 94' extends through the mounting structure 92 and is able to move (e.g., translate) into the central aperture defined by each of the conductive coils 73, 75, 79 as the extendable structure 92 moves relative to the mounting structure 92 throughout the translational travel thereof so as to extend through each of the central apertures when the sealing module 90 is in the retracted position shown by FIG. 11. The power supply system 85 is electrically coupled (e.g., connected) to the primary conductive coils 73 by a power channel P1 while the control system 87 is communicatively coupled (e.g., connected) to each portion of the secondary conductive coils 75, 79 by respective communication channels C1, C2.

In use, when the power supply system 85 applies the AC voltage to the primary conductive coil 73, an alternating magnetic field is generated by the primary conductive coil 73. This alternating magnetic field induces voltages in the adjacent portions 75, 79 of the secondary conductive coil. However, a position of the ferromagnetic member relative to the conductive coils 73, 75, 79 affects the strength magnetic coupling between the primary and secondary conductive coils. When the ferromagnetic member 94' is at a null (e.g., centrally neutral) position with respect to the different portions 75, 79 of the secondary conductive coil, the voltages induced in the different portions 75, 79 of the secondary conductive coil are equal and opposite, resulting in a net current through the secondary conductive coil of substantially zero. On the other hand, when the ferromagnetic member 94' moves away from the null position as the extendable structure 94 moves relative to the mounting structure 92, the voltages induced in the different portions 75, 79 of the secondary conductive coil are no longer equal and opposite (e.g., a differential voltage is created), resulting in a non-zero net current through the secondary conductive coil. The net current through (or the voltage across) the secondary conductive coil is monitored by the control system 87 and used by the control system to determine (e.g., absolutely determined) the position of the extendable structure 94 relative to the mounting structure 92. **In** the example of FIGs. 10 and 11, the net current through (or the voltage across) the secondary conductive coil SC-1, SC-2 is therefore the signal generated by the sensing arrangement 83 which is indicative of the position of the position of the extendable structure 94 relative to the mounting structure 92.

Propulsion machines in accordance with the present disclosure enable in-situ live/real-time monitoring of the position of the extendable structure 94 relative to the mounting structure 92, which relate to performance and/or safety functionality. A relatively large displacement of the extendable structure 94 relative to the mounting structure 92 corresponds to wearing of the sealing module 90, for example wear on the hinge surfaces 97, 99. Accordingly, in each of the example sealing modules 90 described above with reference to FIGs. 6 to 11, the control system 87 may be configured to determine a wear parameter (e.g., a wear rate) of the sealing module 90 based on the one or more signals generated by the sensing arrangement 83 (e.g., based on the determined position of the extendable structure 94 moves relative to the mounting structure 92). The control system 87 may also be configured to determine an imminent or a current failure of the sealing module 90 (e.g., due to premature wear) based on the one or more signals generated by the sensing arrangement 83. Based on the determined wear parameter and/or determined failure, the sealing module(s) 90 may be replaced or repaired when appropriate. In turn, this reduces a risk of unintended escaping of core air from the exhaust nozzle 30. In-situ monitoring as enabled by propulsion machines in accordance with the present invention may also enable a down-time during inspection to be reduced.

Despite the effective range of an air-cored conductive coil being relatively short, the use of air-cored conductive coils enables a mass of the sealing module to be reduced and the effective range thereof is usable to measure the position of the extendable structure 94 relative to the mounting structure 92 within a displacement range of interest/the travel of the extendable structure 94 relative to the mounting structure 92 (which may be only a few millimetres, such as less than 10 millimetres).

As shown by FIGs. 4 and 5, the exhaust nozzle 30 may comprise a plurality of sealing modules 90, 90' adjacent to one another and aligned with one another. If so, each sealing module 90, 90' may be substantially as described herein. However, the sensing arrangement 83 of each sealing module 90, 90' may be communicatively coupled to a single common control system 87 which is configured to determine the position of the extendable structure 94 relative to the mounting structure 92 (and determine the wear parameter/failure) of each sealing module 90, 90' based on the one or more signals generated by the sensing arrangement 83 thereof. The common control system 87 may assign each sensing arrangement a unique identifier (e.g.,. ID) to allow communicative coupling therebetween to be implementing by arraying the sensing arrangements 83 on a single communication bus, thereby reducing the number of communication channels required and hence reducing a complexity/mass of the exhaust nozzle 30.

Although it has been described that the sensing arrangement 83 comprises a comprises a plurality of conductive coils, this need not necessarily be the case. Namely, it may be that the sensing arrangement comprises alternative means for generating one or more signals indicative of the position of the extendable structure 94 relative to the mounting structure 92. For example, the sensing arrangement 83 may comprise at least one selected from: ultrasonic sensor(s), capacitive sensor(s), or limit switch(s) configured for the purpose of generating one or more signals indicative of the position of the extendable structure 94 relative to the mounting structure 92. However, the use of a plurality of conductive coils in the manner described herein enables the position of the extendable structure 94 relative to the mounting structure 92 to be reliably determined in a challenging environment without requiring mechanical contact between the extendable structure 94 and the sensing arrangement 83.

### Other

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein. The present disclosure is also relevant for land, aviation and marine applications in both civil and military contexts.

## Claims

1. A propulsion machine comprising:
a fluid duct defined by a wall and a moveable member;
a mounting structure coupled to the moveable member;
an extendable structure having a sealing surface, the extendable structure being movable relative to the mounting structure to provide a seal between the sealing surface and an opposing surface of the wall; and
a sensing arrangement configured to generate one or more signals indicative of a position of the extendable structure relative to the mounting structure.

2. The propulsion machine of claim 1, wherein the sensing arrangement comprises a plurality of conductive coils, each conductive coil being offset from one another along a direction corresponding to a travel of the extendable structure relative to the mounting structure.

3. The propulsion machine of claim 2, wherein the conductive coils are each air-cored conductive coils.

4. The propulsion machine of claim 2 or claim 3, wherein the conductive coils are coaxial with one another.

5. The propulsion machine of any of claims 2 to 4, wherein the one or more signals includes an electrical parameter associated with at least one of the conductive coils.

6. The propulsion machine of claim 5, wherein the electrical parameter is a current through the at least one conductive coil.

7. The propulsion machine of any of claims 2 to 4, wherein the one or more signals includes an electrical parameter associated with each of the conductive coils.

8. The propulsion machine of claim 7, wherein the electrical parameter is a current through the respective conductive coil.

9. The propulsion machine of claim 7 or claim 8, comprising a control system configured to compare the monitored electrical parameter of each conductive coil.

10. The propulsion machine of claim 9, wherein the control system is configured to determine the position of the extendable structure based on the comparison.

11. The propulsion machine of any of claims 2 to 10, comprising a ferromagnetic member mechanically coupled to the extendable structure and configured to at least partially move through a central aperture defined by the conductive coils as the extendable structure moves relative to the mounting structure.

12. The propulsion machine of any claims 2 to 10, wherein the extendable structure includes a target surface which opposes one of the conductive coils.

13. The propulsion machine of any of claims to 2 to 12, comprising a power supply system configured to apply an AC voltage to at least one of the conductive coils.

14. The propulsion machine of any of claims to 2 to 13, comprising a power supply system configured to apply an AC voltage to each of the conductive coils.

15. The propulsion machine of any preceding claim, comprising a control system configured to determine a position of the extendable structure based on the one or more signals.
